# EUROPEAN PATENT SPECIFICATION

(11) **EP 0 450 317 B1**
(45) Date of publication and mention of the grant of the patent: **21.08.1996**
(21) Application number: 91103197.9
(22) Date of filing: 04.03.1991
(51) Int. Cl.: C08F 8/12, C08F 218/08

(54) **Vinyl acetate/vinyl alcohol copolymer, production process and use thereof**
Vinylacetat-Vinylalkoholcopolymere, Verfahren zur Herstellung und Verwendung davon
Copolymères d'acétate de vinyle et d'alcool vinylique, leur procédé de préparation et leur application

(30) Priority: 07.03.1990 IT 1958790
(43) Date of publication of application: 09.10.1991
(73) Proprietor: 3V LUXEMBOURG S.A., Luxembourg (LU)
(72) Inventor: Borrini, Giancarlo, 6900 Lugano (CH)
(74) Representative: Faggioni, Marco, Dr. Ing.

(56) References cited:
- FR-A- 2 207 149
- FR-A- 2 339 628
- FR-A- 2 596 764
- CHEMICAL ABSTRACTS, vol. 104, no. 10, March 1986, page 11, abstract no. 69324s, Columbus, Ohio, US; & DD-A-223 455

## Description

The present invention concerns a vinyl acetate/vinyl alcohol copolymer, having a particular and predetermined distribution of the molecular weights between the different copolymeric chains and a block distribution of the hydroxyl groups inside each single copolymeric chain. The invention also concerns a process for the production of such a copolymer and a preferred use thereof as suspending agent in the suspension polymerization of vinyl chloride.

It is widely known that vinyl acetate/vinyl alcohol copolymers (VAc/VOH) are industrially prepared starting from polyvinyl acetate - in which the acetate groups are partially substituted by hydroxyl groups - both by direct hydrolysis and by transesterification. The parameters characterizing the copolymer and determining, at a first approach, its properties are: the proportion between the number of hydroxyl groups and the total number of groups (acetate + hydroxyl) present in the copolymer, also known as degree of hydrolysis of the copolymer, and the average molecular weight of the copolymer (which of course depends on the molecular weight of the starting polyvinyl acetate and on the hydrolysis degree).

To better define the properties of the VAc/VOH copolymer - as surface-active and dispersing activity, and generally its fitness for any specific field of application - it is however necessary to consider, besides the aforementioned parameters, also the distribution of the molecular weights between the different copolymeric chains, and how the alcohol groups are distributed in each chain. These essentially depend - as well as, of course, on the starting polyvinyl acetate - on the techniques adopted for hydrolysis or for transesterification and, in particular, on the concentration and on the pH of the reaction system.

The reaction of substitution of the acetate groups in the polyvinyl acetate can in fact be indifferently carried out into an acid or into a basic system. In the first case, inorganic acids - as hydrochloric, sulphuric and aryl-sulphonic acid - are used as acid catalysts; in the second case, alcoholates and hydroxides of alkaline metals are used as basic catalysts. According to the type of reaction, there will be a different distribution of the hydroxyl groups in the polymeric chain: in fact, in the acid reaction, the distribution of said groups is substantially random, while in the basic reaction, there will substantially be a formation of homogeneous sequences, or blocks, of hydroxyl groups.

The particular substitution of the acetate groups - characteristic of the reaction of transesterification carried out in a basic system - takes place thanks to the fact that the hydroxyl groups adjacent to the acetate groups strongly increase the reactivity of these last ones, probably due to absorption of the alkali onto the free hydroxyl groups and to reduction of the steric hindrance resulting from the substitution. The reaction is thus autocatalytic and, once started, it increases at a speed gradually rising with the degree of hydrolysis, which leads to the preferential formation of uniform blocks, i.e. continuous sequences, of hydroxyl groups.

The basic reaction of transesterification, and particularly that catalyzed by an alkaline alcoholate, appears to be the most suited for the industrial production of VAc/VOH copolymers to be used as primary, co-primary and secondary suspending agents in the suspension polymerization of vinyl chloride. The US-A-4,258,163 describes a preparation method adopting said type of reaction to obtain VAc/VOH block copolymers with a molar degree of hydrolysis between 30% and 65%, and the use of the copolymers thus obtained as suspending agents in the suspension polymerization of vinyl chloride.

Starting from the aforedescribed technique, the Applicant has concentrated his searches on finding VAc/VOH copolymers - with a particular and predetermined distribution of the molecular weights between the different polymeric chains of the copolymer, and a block distribution of the hydroxyl groups inside each single polymeric chain - having an increased activity in respect of the known copolymers, and furthermore, on the study of industrial processes allowing to obtain said copolymers with industrially satisfactory yields.

In particular, the object of the present invention is to supply VAc/VOH copolymers - useful as primary, co-primary or secondary suspending agents in the suspension polymerization of vinyl chloride - suited to allow producing PVC practically exempt from closed cells. In fact, the VAc/VOH copolymers already used for this purpose in known technique, lead to the production of PVC with fairly high percentages of closed cells, which are apt to retain the residual non-polymerized monomer, difficult to be removed during the normal production processes. Said residual monomer is however gradually transferred into the environment, causing great health problems to the workers dealing with the production and conversion of said PVC.

According to the present invention, the above object is reached with vinyl acetate/vinyl alcohol copolymer wherein:
a) the alcohol groups and the acetate groups are distributed in blocks in the polymeric chains;
b) the average degree of polymerization is from 150 to 1500;
c) the molar degree of hydrolysis is from 60% to 80%; and
d) the molecular weight distribution includes from 5% to 10% of oligomers with a degree of polymerization from 5 to 30.

According to a preferred characteristic of the invention, the average length of the blocks of the alcohol groups is between 8 and 12 units, and the average length of the blocks of the acetate groups is between 3 and 5 units.

The vinyl acetate/vinyl alcohol copolymer of the present invention is preferably produced with a process comprising the steps of:
- preparing a solution of a polyvinyl acetate with average degree of polymerization from 150 to 1500 and having, in the distribution of the molecular weights, from 5% to 10% of oligomers with degree of polymerization from 5 to 30;
- subjecting said solution to a reaction of alkaline transesterification;
- stopping the reaction of transesterification by neutralization with acid, when reaching a degree of hydrolysis from 60% to 80%, and preferably from 65% to 75%;
- stripping the solvents by:
   - substitution with boiling water, to obtain the reaction product as an aqueous solution;
   - drying, up to dryness, to obtain the reaction product as a solid substance.

The VAc/VOH copolymer of the present invention is preferably used as a suspending, stabilizing, modifying or antistatic agent in the suspension polymerization of vinyl chloride, both pure and mixed with other monomers.

A Patent Application concerning a process for the production of PVC, using as a suspending agent the copolymer of the present invention, is being simultaneously filed by the Applicant under No. 91103196.1.

The present invention will now be described in further detail hereinafter, also with reference to some examples of production processes of the copolymers object of the same, and of use of said copolymers as suspending agents in the suspension polymerization of vinyl chloride, without however being limited to said examples.

The VAc/VOH copolymer of the present invention has a degree of polymerization between 150 and 1500, and preferably between 200 and 1000. To obtain the special remarkable results of the invention, it is indispensable for the distribution of the molecular weights to include 5% to 10% by weight of oligomers with a degree of polymerization between 5 and 30.

Since the VAc/VOH copolymer of the present invention is obtained - as said above - by transesterification of a polyvinyl acetate, it is indispensable for the desired degree of polymerization and for the stated distribution to be already present in the starting polyvinyl acetate, which should hence be specifically produced for this purpose. In the present invention, the GPC technique has been adopted to determine the exact distribution of the molecular weights in the polyvinyl acetate.

The VAc/VOH copolymer of the present invention has a molar degree of hydrolysis between 60% and 80%, and preferably between 65% and 75%, and a block distribution of the vinyl alcohol groups and of the vinyl acetate groups. The average length of such blocks is considerable and it is in the range of 8 to 12 units for the alcohol groups and of 3 to 5 units for the acetate groups. The type of block distribution of the two groups in the polymeric chains can be determined by NMR C¹³ spectroscopy. Preferably, the VAc/VOH copolymer of the present invention also contains at least 0.20% by weight of carbonyl radicals.

The process to produce the VAc/VOH copolymer of the present invention thus involves the previous preparing of a polyvinyl acetate with the desired degree of polymerization and containing oligomers to the aforespecified extent. According to the invention, said polyvinyl acetate is prepared by a process including a two-step polymerization - a bulk polymerization followed by a solution polymerization - carried out at varying temperatures.

Said process provides for a first step in which a first fraction of the vinyl acetate monomer, included between 10% and 50% of the total, a radical initiator, and a chain transfer agent, are charged into a reaction vessel. The mixture is heated up to reaching a temperature about 20°-30°C higher than boiling temperature and is left to react; at the end of the reaction, and to complete the polymerization of the monomer, the temperature is raised up to exceeding 120°C.

In the second step of the process, the mixture obtained in the first step is dissolved in solvents, preferably alcohols with 1-4 carbon atoms, or their mixtures, and left to cool down to about 50°C. To the solution there is then added the residual monomer fraction (90%-50%) and, possibly, some additional parts of the radical initiator and of the chain transfer agent already used in the first step; the amount of chain transfer agent added altogether in the two steps of the process should not exceed 5% by weight on the total weight of the reagents. The solution is subsequently heated up to boiling temperature, and the solution polymerization is completed up to maximum conversion.

The polyvinyl acetate obtained at the end of the aforedescribed process satisfies the above mentioned requirements concerning molecular weights and their distribution, and desirably contains at least 0.15% by weight (on the weight of the polyvinyl acetate) of carbonyl groups, so as to give the wanted characteristics to the VAc/VOH copolymer which will be derived therefrom. For this purpose - during the polymerization process and after addition of the other components - an agent containing carbonyl radicals is added, usefully being the same agent which also acts as chain transfer agent.

The polyvinyl acetate thus obtained is subjected to a transesterification process in order to obtain the VAc/VOH copolymer of the present invention. In a first step, the polyvinyl acetate is diluted in solvents up to obtaining a solution with maximum viscosity of 100 cps; alcohols with 1-4 carbon atoms, or their mixtures, are preferably used for this purpose. Said solution is subsequently heated at a temperature of 70°to 90°C, and a transesterification catalyst - preferably an alkaline metal alcoholate - is then gradually added, stirring the mixture. The addition of the catalyst is carried out continuously and in progressively decreasing quantities, so as to keep the rate of hydrolysis as constant as possible, taking into account the autocatalytic characteristics of the reaction. The stirring speed is adjusted so that the ratio between peripheral stirring speed, expressed in metres/minute, and rate of hydrolysis, expressed in % hydrolysis degree per minute, is equal to or higher than 100.

On reaching the desired degree of hydrolysis, the reaction is stopped by adding acid up to neutralization; the solvents are then stripped with boiling water or by drying.

As stated above, the VAc/VOH copolymers of the present invention are preferably used as primary, co-primary and secondary suspending agents, as well as stabilizing, modifying and anti static agents, in the suspension polymerization of vinyl chloride. It is known to use VAc/VOH copolymers in the polymerization process to obtain PVC, and their effect on the morphological characteristics of PVC resin is equally known. Examples of processes of this type are described in US-B-2,812,318 and in DE-A-1.171.158. The proportion of suspending agents used in these known processes varies from 0.03 to 1% by weight, on the weight of the monomer or mixture of monomers employed.

In PVC production processes using as suspending agents the known type VAc/VOH copolymers, it has however not been possible to obtain up to date PVC resins exempt from the phenomenon of occluded or closed porosity, which influences negatively the elimination of the residual monomer from the polymer, causing the already cited health problems.

Closed porosity consists of cavities formed into the PVC particles and not connected with the exterior; the monomer retained therein during the polymerization process then finds it very difficult to rapidly permeate through such cavities outside the particle at the end of the process. Closed porosity, and the consequent structural heterogeneity of the PVC resin, also leads to an overall deterioration of the general characteristics of said resin.

Closed porosity is determined by measuring the inherent density of the PVC particles (Bolakirkaya-Shtarkman), while open or accessible porosity is determined by mercury intrusion, using a porosimeter produced by the firm Carlo Erba of Milan and determining the porosity on the resin as such and on the > 100µ and >100µ fractions.

The use of the copolymers of the present invention as suspending agents in the suspension polymerization of vinyl chloride, either pure or mixed with other monomers, has led to the surprising result of producing PVC resins practically exempt from the phenomenon of closed porosity and thus of improved structural homogeneity. This new characteristic of PVC resins, together with a very uniform distribution of their porosity, allows to reach high release speeds of the residual monomer contained in the cells of each PVC particle, so that, at the end of production, the PVC is practically exempt therefrom.

The PVC resins obtained using the copolymers of the present invention differ moreover from the similar resins existing on the market for an improved thermal stability, for the absence of electrostatic charges, and for a higher percentage of VAc/VOH copolymer grafted onto the PVC particles during polymerization. Finally, thanks to the high purity of the VAc/VOH copolymers obtained with the process of the present invention and, in particular, to the low content therein of ions of alkaline or earthy-alkaline metals (always less than 1000 ppm), and thus to their very low electrical conductivity, the PVC resins produced therewith have a high resistivity which make them particularly suited for use as insulating materials in the electrical field.

### EXAMPLES

### Polyvinyl acetate synthesis

### Example 1

The monomer, the radical initiator and the chain transfer agent are charged into a 1000-litre stainless steel reaction vessel, equipped with a reflux condenser and with an anchor stirrer, respectively in the following proportions:

| | |
|---|---|
| 30 | parts of vinyl acetate |
| 0.12 | parts of benzoyl peroxide |
| 3 | parts of acetaldehyde. |

The mixture is heated up to reaction temperature, which is at least 20°-30°C higher than boiling temperature of the reaction system.

At the end of the reaction, to complete conversion, the temperature is raised up to exceeding 120°C. After full conversion, the residual chain transfer agent is removed under vacuum.

120 parts of methyl alcohol are then charged, leaving the reaction system to cool down to 50°C. The following are subsequently charged:

| | |
|---|---|
| 70 | parts of vinyl acetate |
| 1.5 | parts of benzoyl peroxide |
| 0.12 | parts of acetaldehyde. |

The mixture is heated up to boiling temperature of the system, and the solution polymerization is completed up to maximum conversion, adding 0.5 parts of bis(4-terz.butyl-cyclohexyl)peroxidicarbonate in at least 60 minutes.

The polymer obtained - corresponding to tests e) and f) of Table I - has an average degree of polymerization of 350, and comprises about 7% of small molecules consisting of oligomers with molecular weight from 500 to 3000. The polymer has an average molecular weight of 19000, and contains about 0.16% of carbonyl radicals.

### Example 2

The following are charged into a reaction vessel identical to that of Example 1:

| | |
|---|---|
| 20 | parts of vinyl acetate |
| 0.10 | parts of benzoyl peroxide |
| 1.5 | parts of acetaldehide. |

The mixture is heated up to reaction temperature, which is at least 20°-30°C higher than boiling temperature of the reaction system.

At the end of the reaction, to complete conversion, the temperature is raised up to exceeding 120°C. After full conversion, no vacuum step is carried out, but 55 parts of methyl alcohol are directly charged in the reaction vessel, leaving the reaction system to cool down to 50°C. The following are subsequently charged:

| | |
|---|---|
| 80 | parts of vinyl acetate |
| 0.20 | parts of benzoyl peroxide. |

The mixture is heated up to boiling temperature of the system, and the solution polymerization is completed up to maximum conversion, adding 0.25 parts of bis(4-terz.butyl-cyclohexyl)peroxidicarbonate in at least 60 minutes.

The polymer obtained - corresponding to test d) of Table I - has an average degree of polymerization of 810, and comprises about 10% of small molecules consisting of oligomers with molecular weight from 500 to 3000. The polymer has an average molecular weight of 66000, and contains about 0.15% of carbonyl radicals.

### Example 3

The following are charged into a reaction vessel identical to that of Example 1:

| | |
|---|---|
| 20 | parts of vinyl acetate |
| 0.06 | parts of benzoyl peroxide |
| 0.9 | parts of acetaldehide. |

The mixture is heated up to reaction temperature, which is at least 20°-30°C higher than boiling temperature of the reaction system.

At the end of the reaction, to complete conversion, the temperature is raised up to exceeding 120°C. After full conversion, no vacuum step is carried out, but 60 parts of methyl alcohol are charged in the reaction vessel, leaving the reaction system to cool down to 50°C. The following are subsequently charged:

| | |
|---|---|
| 80 | parts of vinyl acetate |
| 0.22 | parts of benzoyl peroxide. |

The mixture is heated up to boiling temperature of the system, and the solution polymerization is completed up to maximum conversion, adding 0.25 parts of bis(4-terz.butyl-cyclohexyl)peroxidicarbonate in at least 60 minutes.

The polymer obtained - corresponding to test c) of Table I - has an average degree of polymerization of 950, and comprises about 5% of small molecules consisting of oligomers with molecular weight from 500 to 3000. The polymer has an average molecular weight of 71000, and contains about 0.15% of carbonyl radicals.

### Reaction of transesterification

### Example 4

In the same reaction vessel of the polyvinyl acetate, the polyvinyl acetate solution - prepared as in the previous examples - is diluted in methyl alcohol up to a concentration corresponding to a maximum viscosity of 100 cps at 60°C (for example, 100 parts of polyvinyl acetate - 270 parts of methyl alcohol).

The solution is heated up to reaching a temperature of at least 80°C, and anyhow not below 70°C. A catalyst consisting of a 10% sodium methylate solution is fed in a proportion not exceeding 2 moles for each 1000 moles of polyvinyl acetate, at a flow rate corresponding to a molar rate of hydrolysis of 1% per minute, in a stirring system with peripheral speed of at least 100 meters per minute.

The sodium methylate feed flow rate is gradually reduced with the transesterification rate, which must be as constant as possible.

Having reached the desired degree of hydrolysis (copolymers c-d-e-f), the mixture is neutralized with acetic acid in stoichiometric quantities referred to the added alcoholate, and in any case up to a pH between 6 and 7.

The solvent is subsequently stripped and the VAc/VOH copolymer is simultaneously solubilized in boiling water at a temperature of at least 98°C.

The copolymers obtained are analyzed for what concerns the following chemical-physical characteristics:
- molar degree of hydrolysis
- average number of units of the vinyl alcohol blocks
- average number of units of the vinyl acetate blocks
- average dimension of the particle
- concentration in water
- clouding temperature
- surface tension
- ions of alkaline or earthy-alkaline metals
- toxic solvents: methanol and methanol acetate.

The relative data is reported in Table I. This Table also reports the same characteristics referring to comparison samples a) and b), which are VAc/VOH copolymers available on the market. In particular, sample a) is sold by the British firm REVERTEX under the commercial name of ALCOTEX 72.5, while sample b) is sold by the German firm WACKER under the commercial name of POLYVIOL 05/290.

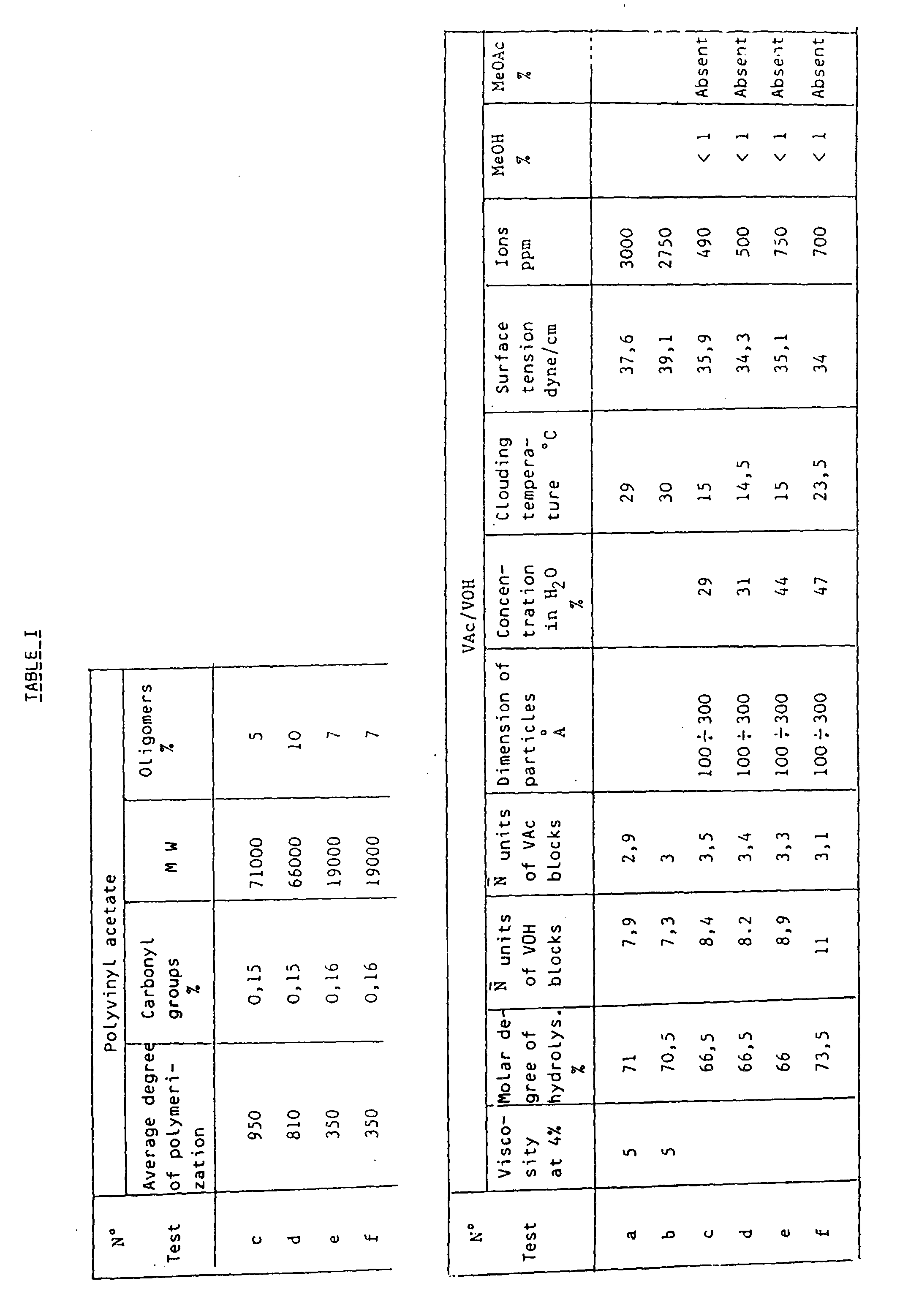

### Polymerization of vinyl chloride

### Examples 5-20

The following components are charged into a reaction vessel having a volume of 15 cubic meters and equipped with a Pfaudler stirrer:

| | |
|---|---|
| 100 | parts of vinyl chloride |
| 120 | parts of demineralized water |
| 0.045 | parts of bis(4-terz.butyl-cyclohexyl)peroxidicarbonate |
| x | ppm of the VAc/VOH copolymers of the present invention (samples c,d,e,f) or of comparison copolymers (samples a,b), x being the quantity indicated in Table II. |

The polymerization is carried out at 54°C, at a stirring speed of 120 r.p.m., in the absence of oxygen. The reaction is stopped when a 90% conversion is reached, to which there corresponds an Δ P of 4.5 kg/cm². The reaction product is stripped under vacuum at 90°C for at least 100 minutes, dried, and analyzed for what concerns the following properties:
- K value of the PVC, measured according to DIN 53726
- closed porosity
- open porosity
- average diameter of the particle
- granulometry
- apparent density
- residual vinyl chloride monomer
- volume resistivity
- VAc/VOH copolymer grafted on PVC
- thermal stability Ca-Zn
- presence/absence of electrostatic charges.

The results of the tests are reported in Table II. Examples 5 to 8 refer to VAc/VOH copolymers of known technique, while Examples 9 to 20 refer to the copolymers of the present invention, or to mixtures thereof.

### Examples 21-23

The aforedescribed polymerization process is repeated changing the polymerization temperature, which is now raised to 70°C. Examples 21 and 22 use the same VAc/VOH copolymers as the previous Examples 5 and 13, while Example 23 uses the mixture of copolymers used in Example 17, in different proportions. The results of the tests carried out on the PVC thus obtained are also reported in Table II. Example 21 refers to a VAc/VOH copolymer of known technique, while Examples 22 and 23 refer to the copolymers of the present invention, or to mixtures thereof.

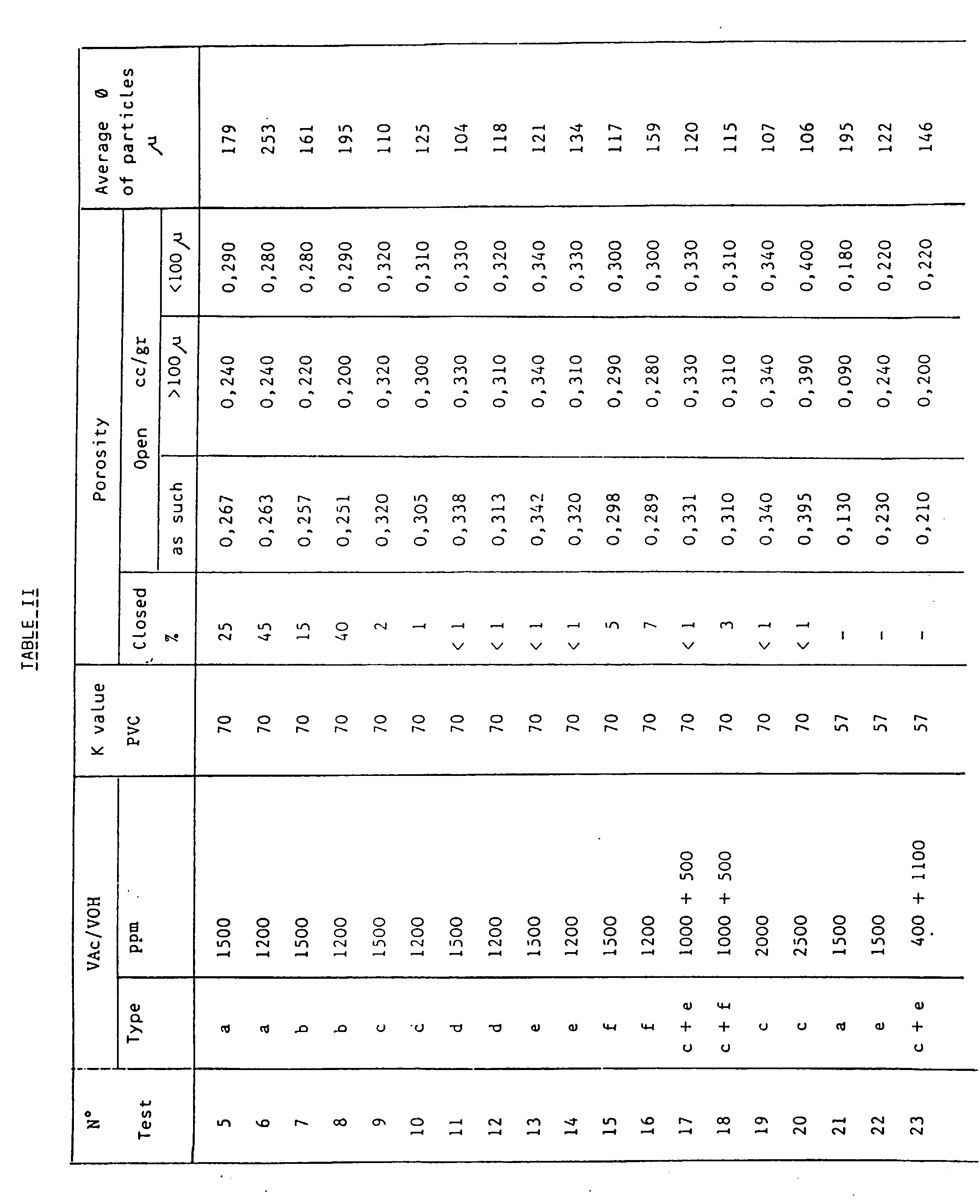

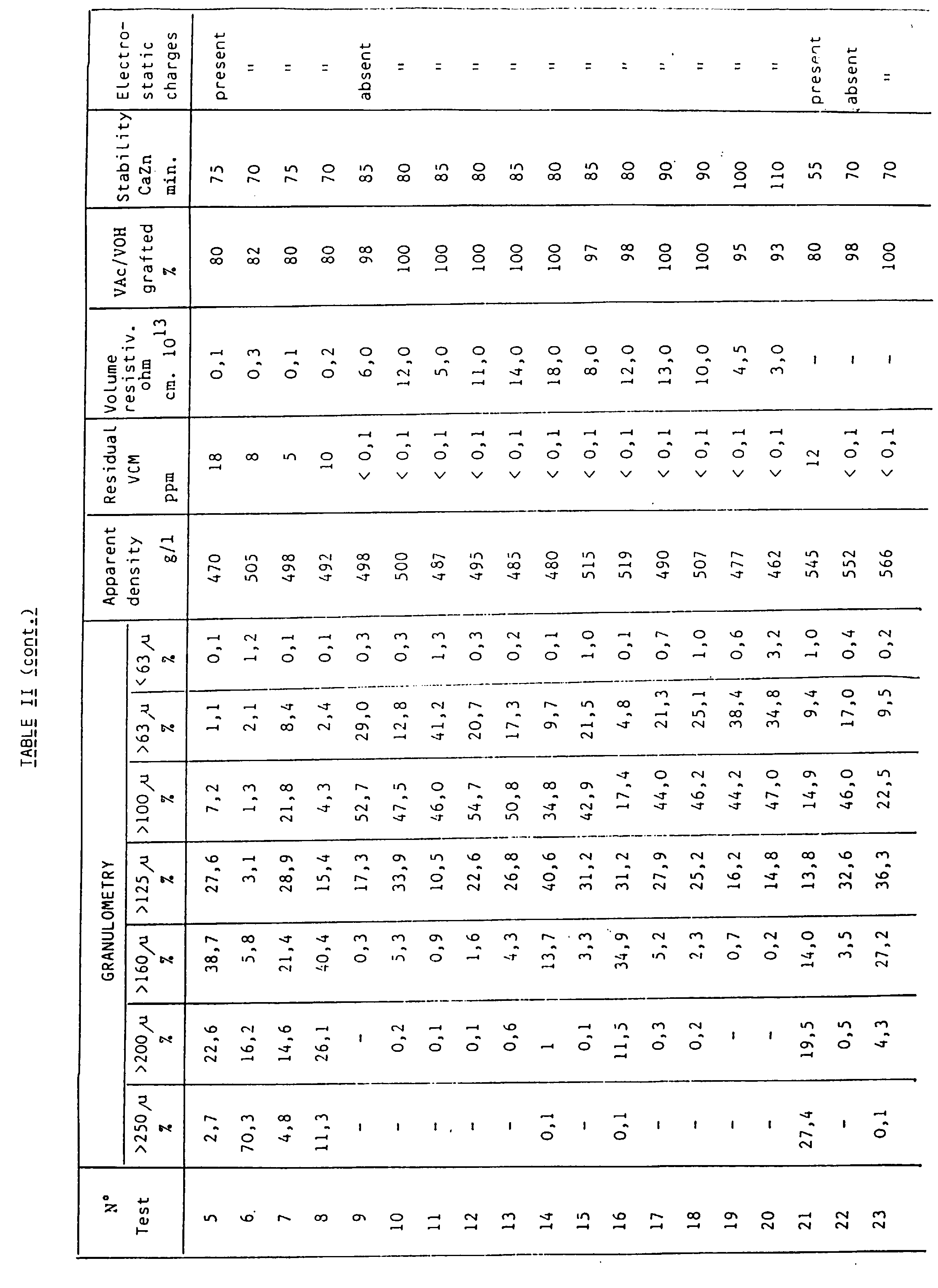

## Claims

1. Vinyl acetate/vinyl alcohol copolymer wherein:
a) the alcohol groups and the acetate groups are distributed in blocks in the polymeric chains;
b) the average degree of polymerization is from 150 to 1500;
c) the molar degree of hydrolysis is from 60% to 80%; and
d) the molecular weight distribution includes from 5% to 10% of oligomers with a degree of polymerization from 5 to 30.

2. Copolymer as in claims 1), containing moreover at least 0.20% by weight of carbonyl radicals.

3. Copolymer as in claim 1), wherein the average length of the blocks of the alcohol groups is from 8 to 12 units, and the average length of the blocks of the acetate groups is from 3 to 5 units.

4. Copolymer as in claim 1), wherein the average degree of polymerization is from 200 to 1000.

5. Copolymer as in claim 1), wherein the molar degree of hydrolysis is from 65% to 75%.

6. Copolymer as in claim 1), in aqueous solution containing up to 60% by weight of copolymer.

7. Copolymer as in claim 1), wherein the content of ions of alkaline or earthy-alkaline metals is below 1000 ppm.

8. Process for the production of vinyl acetate/vinyl alcohol copolymers according to claims 1) to 7), characterized in that it comprises the steps of:
- preparing a solution of a polyvinyl acetate with average degree of polymerization from 150 to 1500 and having, in the distribution of the molecular weights, from 5% to 10% of oligomers with degree of polymerization from 5 to 30;
- subjecting said solution to a reaction of alkaline transesterification;
- stopping the reaction of transesterification by neutralization with acid, when reaching a degree of hydrolysis from 60% to 80%, and preferably from 65% to 75%;
- stripping the solvents.

9. Process as in claim 8), wherein the stripping of the solvents is carried out by substitution with boiling water.

10. Process as in claim 8), wherein the stripping of the solvents is carried out by drying, up to dryness.

11. Process as in claim 8), wherein said polyvinyl acetate contains at least 0.15% by weight of carbonyl radicals in the polymeric chain.

12. Process as in claim 8), wherein the solvents used for the solubilization of the polyvinyl acetate are alcohols with 1-4 carbon atoms, or their mixtures.

13. Process as in claim 12), wherein the alcohol used is methyl alcohol.

14. Process as in claim 8), wherein the amount of solvents added to the polyvinyl acetate is such that the final viscosity of the mixture is equal to or lower than 100 cps.

15. Process as in claim 8), wherein the reaction of alkaline transesterification is carried out at a temperature between 70°C and 90°C.

16. Process as in claim 8), wherein the reaction of alkaline transesterification is catalyzed by an alkaline metal alcoholate, added in progressively decreasing quantities, so as to keep the rate of hydrolysis practically constant.

17. Process as in claim 8) wherein, during the reaction of transesterification, the mixture is stirred and the ratio between peripheral stirring speed and rate of hydrolysis is equal to or higher than 100 meters per % hydrolysis degree.

18. Process as in claim 8), wherein the reaction of transesterification is stopped by adding acid in stoichiometric quantity in respect of the quantity of alkaline catalyst added during the reaction.

19. Process as in claim 8), wherein the reaction of transesterification is stopped by adding acid, up to reaching a pH of the reaction system between 6 and 7.

20. Process as in claims 18) and 19), wherein said acid is acetic acid.

21. Process as in claim 8), wherein said polyvinyl acetate solution is prepared by:
- carrying out a reaction of bulk polymerization between a first fraction of vinyl acetate monomer, a radical initiator and a chain transfer agent;
- dissolving the reaction product into solvents;
- adding to the solution the residual fraction of vinyl acetate monomer and, possibly, some additional parts of the radical initiator and of the chain transfer agent, and then carrying out a reaction of solution polymerization.

22. Process as in claim 21), wherein the weight ratio between the monomer fraction in the bulk polymerization and the monomer fraction in the solution polymerization is in the range from 1/9 to 1/1.

23. Process as in claim 21), wherein the amount of chain transfer agent used altogether in the steps of the process does not exceed 5% by weight on the total weight of the reagents employed.

24. Process as in claim 21), wherein bulk polymerization is carried out at a temperature 20°-30°C higher than boiling temperature of the system, and - at the end of the reaction - at a temperature of, or exceeding, 120°C.

25. Process as in claim 21), wherein the reaction product of bulk polymerization is at once dissolved in alcohols with 1-4 carbon atoms, or their mixtures, and then left to cool down to 50°C.

26. Process as in claim 25), wherein the alcohol used is methyl alcohol.

27. Process as in claim 21), wherein the solution polymerization is carried out at a temperature almost corresponding to boiling temperature of the system.

28. Process as in claim 21), wherein said chain transfer agent is a carbonyl compound.

29. Process as in claim 21), wherein said chain transfer agent is acetaldehide.

30. Process as in claim 21), wherein said radical initiator is benzoyl peroxide.

31. Use of a vinyl acetate/vinyl alcohol copolymer according to claims 1. to 7), as a suspending, stabilizing, modifying and antistatic agent, in the suspension polymerization of vinyl chloride, both pure and mixed with other monomers.

## Patentansprüche

1. Vinylacetat-Vinylalkoholcopolymer, wobei:
a) die Alkoholgruppen und die Acetatgruppen in den Polymerketten in Blöcken verteilt sind;
b) der mittlere Polymerisationsgrad von 150 bis 1.500 beträgt.
c) der molare Hydrolysegrad von 60 % bis 80 % beträgt; und
d) die Molekulargewichtsverteilung von 5 % bis 10 % Oligomere einschließt, mit einem Polymerisationsgrad von 5 bis 30.

2. Copolymer nach Anspruch 1, welches überdies wenigstens 0,20 Gew.-% Carbonylreste enthält.

3. Copolymer nach Anspruch 1, wobei die mittlere Länge der Blöcke der Alkoholgruppen von 8 bis 12 Einheiten beträgt und die mittlere Länge der Blöcke der Acetatgruppen von 3 bis 5 Einheiten beträgt.

4. Copolymer nach Anspruch 1, wobei der mittlere Polymerisationsgrad von 200 bis 1.000 beträgt.

5. Copolymer nach Anspruch 1, wobei der molare Hydrolysegrad von 65 % bis 75 % beträgt.

6. Copolymer nach Anspruch 1 in wäßriger Lösung, die bis zu 60 Gew.-% Copolymer enthält.

7. Copolymer nach Anspruch 1, wobei der Gehalt an Ionen von Alkali- oder Erdalkalimetallen unter 1.000 ppm liegt.

8. Verfahren zur Herstellung von Vinylacetat-Vinylalkoholcopolymeren nach den Ansprüchen 1 bis 7, dadurch gekennzeichnet, daß es die Schritte umfaßt:
- Herstellung einer Lösung eines Polyvinylacetats mit einem mittleren Polymerisationsgrad von 150 bis 1.500 und mit, in der Verteilung der Molekulargewichte, von 5 % bis 10 % Oligomere mit einem Polymerisationsgrad von 5 bis 30;
- Unterziehen besagter Lösung unter eine alkalische Umesterungsreaktion;
- Stoppen der Umesterungsreaktion durch Neutralisation mit Säure, wenn ein Hydrolysegrad von 60 % bis 80 %, und vorzugsweise 65 % bis 75 %, erreicht ist;
- Strippen der Lösungsmittel.

9. Verfahren nach Anspruch 8, wobei das Strippen der Lösungsmittel durch Ersetzen mit siedendem Wasser durchgeführt wird.

10. Verfahren nach Anspruch 8, wobei das Strippen der Lösungsmittel durch Trocknung, bis zur Trockne, durchgeführt wird.

11. Verfahren nach Anspruch 8, wobei besagtes Polyvinylacetat wenigstens 0,15 Gew.-% Carbonylreste in der Polymerkette enthält.

12. Verfahren nach Anspruch 8, wobei die für das Löslichmachen des Polyvinylacetats verwendeten Lösungsmittel Alkohole mit 1-4 Kohlenstoffatomen oder deren Mischungen sind.

13. Verfahren nach Anspruch 12, wobei der verwendete Alkohol Methylalkohol ist.

14. Verfahren nach Anspruch 8, wobei die Menge an Lösungsmitteln, die dem Polyvinylacetat zugesetzt wird, so ist, daß die Endviskosität der Mischung gleich oder geringer als 100 cps ist.

15. Verfahren nach Anspruch 8, wobei die alkalische Umesterungsreaktion bei einer Temperatur zwischen 70°C und 90°C durchgeführt wird.

16. Verfahren nach Anspruch 8, wobei die alkalische Umesterungsreaktion durch ein Alkalimetallalkoholat katalysiert wird, das in progressiv abnehmenden Mengen zugesetzt wird, um die Hydrolysegeschwindigkeit praktisch konstant zu halten.

17. Verfahren nach Anspruch 8, wobei, während der Umesterungsreaktion, die Mischung gerührt wird und das Verhältnis zwischen Umfangsrührgeschwindigkeit und Hydrolysegeschwindigkeit gleich oder größer als 100 Meter pro % Hydrolysegrad ist.

18. Verfahren nach Anspruch 8, wobei die Umesterungsreaktion durch Zugabe von Säure in stöchiometrischer Menge in bezug auf die Menge an während der Reaktion zugesetztem alkalischem Katalysator gestoppt wird.

19. Verfahren nach Anspruch 8, wobei die Umesterungsreaktion durch Zugabe von Säure bis zum Erreichen eines pHs des Reaktionssystems zwischen 6 und 7 gestoppt wird.

20. Verfahren nach den Ansprüchen 18 und 19, wobei besagte Säure Essigsäure ist.

21. Verfahren nach Anspruch 8, wobei besagte Polyvinylacetat-Lösung hergestellt wird durch:
- Durchführung einer Massepolymerisationsreaktion zwischen einer ersten Fraktion aus Vinylacetat-Monomer, einem Radikalinitiator und einem Kettenübertragungsmittel;
- Lösen des Reaktionsproduktes in Lösungsmitteln;
- Zugeben der Rückstandsfraktion aus Vinylacetat-Monomer und möglicherweise einiger zusätzlicher Anteile des Radikalinitiators und des Kettenübertragungsmittels zur Lösung und anschließendes Durchführen einer Lösungspolymerisationsreaktion.

22. Verfahren nach Anspruch 21, wobei das Gewichtsverhältnis zwischen der Monomerfraktion in der Massepolymerisation und der Monomerfraktion in der Lösungspolymerisation im Bereich von 1/9 bis 1/1 liegt.

23. Verfahren nach Anspruch 21, wobei die Menge an Kettenübertragungsmittel, die insgesamt in den Schritten des Verfahrens verwendet wird, 5 Gew.-% des Gesamtgewichts der eingesetzten Reagenzien nicht übersteigt.

24. Verfahren nach Anspruch 21, wobei die Massepolymersation bei einer Temperatur von 20°C-30°C höher als die Siedetemperatur des Systems und - am Ende der Reaktion - bei einer Temperatur von oder über 120°C durchgeführt wird.

25. Verfahren nach Anspruch 21, wobei das Reaktionsprodukt der Massepolymerisation sofort in Alkoholen mit 1-4 Kohlenstoffatomen, oder deren Mischungen, gelöst wird, und man es dann auf 50°C herunter abkühlen läßt.

26. Verfahren nach Anspruch 25, wobei der Alkohol Methylalkohol ist.

27. Verfahren nach Anspruch 21, wobei die Lösungspolymerisation bei einer Temperatur durchgeführt wird, die nahezu der Siedetemperatur des Systems entspricht.

28. Verfahren nach Anspruch 21, wobei besagtes Kettenübertragungsmittel eine Carbonylverbindung ist.

29. Verfahren nach Anspruch 21, wobei besagtes Kettenübertragungsmittel Acetaldehyd ist.

30. Verfahren nach Anspruch 21, wobei besagter Radikalinitiator Benzoylperoxid ist.

31. Verwendung eines Vinylacetat-Vinylalkoholcopolymers nach den Ansprüchen 1 bis 7, als einem suspendierenden, stabilisierenden, modifizierenden und antistatischen Mittel in der Suspensionspolymerisation von Vinylchlorid, entweder rein oder vermischt mit anderen Monomeren.

## Revendications

1. Copolymère d'acétate de vinyle/alcool vinylique, dans lequel :
a) les groupes alcool et les groupes acétate sont distribués par séquences dans les chaînes polymères ;
b) le degré de polymérisation moyen est de 150 à 1500 ;
c) le degré molaire d'hydrolyse est de 60 à 80% ; et
d) la distribution des masses moléculaires inclut de 5 à 10% d'oligomères ayant un degré de polymérisation de 5 à 30.

2. Copolymère selon la revendication 1, contenant en plus au moins 0,20% en poids de radicaux carbonyle.

3. Copolymère selon la revendication 1, dans lequel la longueur moyenne des séquences de groupes alcool est de 8 à 12 motifs, et la longueur moyenne des séquences de groupes acétate est de 3 à 5 motifs.

4. Copolymère selon la revendication 1, dans lequel le degré de polymérisation moyen est de 200 à 1000.

5. Copolymère selon la revendication 1, dans lequel le degré molaire d'hydrolyse est de 65 à 75%.

6. Copolymère selon la revendication 1, sous forme de solution aqueuse contenant jusqu'à 60% en poids de copolymère.

7. Copolymère selon la revendication 1, dans lequel la teneur en ions de métaux alcalins ou alcalino-terreux est inférieure à 1000 ppm.

8. Procédé de préparation de copolymères d'acétate de vinyle/alcool vinylique selon les revendications 1 à 7, caractérisé en ce qu'il comprend les étapes suivantes :
- préparation d'une solution de polyacétate de vinyle ayant un degré de polymérisation moyen de 150 à 1500 et ayant, dans la distribution des masses moléculaires, de 5 à 10% d'oligomères ayant un degré de polymérisation de 5 à 30 ;
- soumission de ladite solution à une réaction de transestérification alcaline ;
- arrêt de la réaction de transestérification par neutralisation avec un acide, quand elle atteint un degré d'hydrolyse de 60 à 80%, et de préférence, de 65 à 75% ;
- élimination des solvants.

9. Procédé selon la revendication 8, dans lequel l'élimination des solvants est effectué par substitution par de l'eau bouillante.

10. Procédé selon la revendication 8, dans lequel l'élimination des solvants est effectué par séchage, jusqu'à dessiccation.

11. Procédé selon la revendication 8, dans lequel ledit polyacétate de vinyle contient au moins 0,15% en poids de radicaux carbonyle dans la chaîne polymère.

12. Procédé selon la revendication 8, dans lequel les solvants utilisés pour la dissolution du polyacétate de vinyle sont des alcools ayant de 1 à 4 atomes de carbone, ou des mélanges de ceux-ci.

13. Procédé selon la revendication 12, dans lequel l'alcool utilisé est un alcool méthylique.

14. Procédé selon la revendication 8, dans lequel la quantité de solvants ajoutée au polyacétate de vinyle est telle que la viscosité finale du mélange est égale ou inférieure à 100 cps.

15. Procédé selon la revendication 8, dans lequel la réaction de transestérification alcaline est effectuée à une température comprise entre 70 et 90°C.

16. Procédé selon la revendication 8, dans lequel la réaction de transestérification alcaline est catalysée par un alcoolate de métal alcalin, ajouté en des quantités progressivement décroissantes, de façon à maintenir le taux d'hydrolyse pratiquement constant.

17. Procédé selon la revendication 8, dans lequel, pendant la réaction de transestérification, le mélange est agité et le rapport entre la vitesse d'agitation périphérique et le taux d'hydrolyse est égal ou supérieur à 100 mètres par degré d'hydrolyse en %.

18. Procédé selon la revendication 8, dans lequel la réaction de transestérification est arrêtée par addition d'un acide en une quantité stoechiométrique par rapport à la quantité de catalyseur alcalin ajoutée pendant la réaction.

19. Procédé selon la revendication 8, dans lequel la réaction de transestérification est arrêtée par addition d'un acide, husqu'à atteindre un pH compris entre 6 et 7 du système réactionnel.

20. Procédé selon les revendications 18 et 19, dans lequel ledit acide est l'acide acétique.

21. Procédé selon la revendication 8, dans lequel ladite solution de polyacétate de vinyle est préparée par :
- réaction de polymérisation en masse entre une première fraction de monomère d'acétate de vinyle, un initiateur de réaction radicalaire et un agent de transfert de chaînes ;
- dissolution du produit réactionnel dans des solvants ;
- addition à la solution de la fraction résiduelle de monomère d'acétate de vinyle et, éventuellement, de quelques fractions supplémentaires de l'initiateur de réaction radicalaire et de l'agent de transfert de chaînes, puis réaction de polymérisation en solution.

22. Procédé selon la revendication 21, dans lequel le rapport pondéral entre la fraction de monomère dans la polymérisation en masse et la fraction de monomère dans la polymérisation en solution est dans la gamme de 1/9 à 1/1.

23. Procédé selon la revendication 21, dans lequel la quantité d'agent de transfert de chaînes utilisée au total dans les étapes du procédé n'excède pas 5% en poids par rapport au poids total des réactifs utilisés.

24. Procédé selon la revendication 21, dans lequel la polymérisation en masse est effectuée à une température à 20-30°C au-dessus du point d'ébullition du système, et - au terme de la réaction - à une température de, ou excédant, 120°C.

25. Procédé selon la revendication 21, dans lequel le produit réactionnel de la polymérisation en masse est tout de suite dissous dans des alcools ayant de 1 à 4 atomes de carbone, ou des mélanges de ceux-ci, après quoi on le laisse refroidir jusqu'à 50°C.

26. Procédé selon la revendication 25, dans lequel l'alcool utilisé est un alcool méthylique.

27. Procédé selon la revendication 21, dans lequel la polymérisation en solution est effectuée à une température correspondant pratiquement à la température d'ébullition du système.

28. Procédé selon la revendication 21, dans lequel ledit agent de transfert de chaînes est un composé carbonyle.

29. Procédé selon la revendication 21, dans lequel ledit agent de transfert de chaînes est un acétaldéhyde.

30. Procédé selon la revendication 21, dans lequel ledit initiateur de réaction radicalaire est un peroxyde de benzoyle.

31. Utilisation d'un copolymère d'acétate de vinyle/alcool vinylique selon les revendications 1 à 7, en tant qu'agent de suspension, de stabilisation, de modification et antistatique, dans la polymérisation en suspension du chlorure de vinyle, à la fois pur et en mélange avec d'autres monomères.
